Europäisches Patentamt

European Patent Office

Office européen des brevets

(11) Numéro de publication: **0 297 984**
A1

# DEMANDE DE BREVET EUROPEEN

(21) Numéro de dépôt: 88401680.9

(22) Date de dépôt: 30.06.88

(51) Int. Cl.⁴: **B 60 C 17/06**

(30) Priorité: 03.07.87 FR 8709477

(43) Date de publication de la demande:
04.01.89 Bulletin 89/01

(84) Etats contractants désignés:
BE DE ES GB IT SE

(71) Demandeur: HUTCHINSON
2 rue Balzac
F-75008 Paris (FR)

(72) Inventeur: Grillo, Christian Charles François
42, rue Nouvelle Fosseuse
F-60540 Bornel (FR)

(74) Mandataire: Orès, Bernard et al
Cabinet ORES 6, Avenue de Messine
F-75008 Paris (FR)

(54) Dispositif perfectionné de roulage à plat.

(57) Dispositif de roulage à plat pour roue à pneumatique sans chambre à air monté sur une jante par ses talons annulaires coopérant avec les épaulements de ladite jante et comportant à l'intérieur du pneumatique un élément avec lequel est propre à coopérer la face interne de la bande de roulement dudit pneumatique lors du roulage à plat.

L'élément (10) comprend, en combinaison une embase annulaire (25) en matériau élastomère munie d'une armature de renforcement (26) et d'un diamètre intérieur sensiblement égal au diamètre extérieur du fond de jante (14) avec laquelle il coopère pour verrouiller les talons (18, 19) du pneumatique (13), ou contribuer à ce verrouillage, une pluralité de rayons (27) déformables s'étendant radialement à partir de la surface extérieure de ladite embase et une ceinture périphérique inextensible (30) reliée par des moyens (50) aux rayons déformables.

Application : Véhicules militaires, de sécurité, etc...

FIG.1

EP 0 297 984 A1

**Description**

## DISPOSITIF PERFECTIONNE DE ROULAGE A PLAT

L'invention a pour objet un dispositif perfectionné de roulage à plat et, plus particulièrement un tel dispositif propre à équiper une roue à pneumatique sans chambre à air.

Pour permettre aux véhicules à roues munis de pneumatiques sans chambre à air de conserver leur mobilité en cas de perte totale de pression de gonflage, par exemple par crevaison, ou même en cas de perte de pression partielle, on a déjà proposé d'associer à une roue à pneumatique un anneau de sécurité qui, lorsque la pression baisse, fournit un appui à la bande de roulement du pneumatique (voir par exemple EP-A-0 159 274 ou EP-A-104 977). Ces anneaux qui forment à l'intérieur du pneumatique une poutre ou corps toroïdal ont déjà été réalisés en métal, et sont alors parafaitement rigides, ou en d'autres matériaux, plastomères ou élastomères, pour être alors semi-rigides ou souples, respectivement. Quel que soit le mode d'exécution du dispositif, l'effort de roulement est transmis, à travers la poutre, de la partie la plus externe à la partie la plus interne, en contact avec la jante, directement ou indirectement, la partie au contact de la bande de roulement du pneumatique étant sollicitée en compression et le reste du dispositif étant généralement non sollicité.

Un tel mode de fonctionnement qui ne répartit pas les efforts n'est pas favorable à la longévité du dispositif. En outre, lorsque les dispositifs de poutre toroïdale sont de structure rigide ou semi-rigide l'appui de la face interne de la bande de roulement entraîne une détérioration rapide de cette bande après une courte période de roulage à plat, tandis que pour des dispositifs de poutre toroïdale semi-rigide ou souple de bons résultats ne peuvent être obtenus, pour absorber les efforts de roulage, qu'en prévoyant des pièces relativement lourdes, -et cela contrairement à ce que souhaitent les constructeurs de véhicules-, ou en faisant appel à des matériaux constitutifs semi-rigides ou souples qui s'échauffent rapidement au roulage à plat, comme décrit dans US-A-4 163 466, de sorte qu'ils perdent progressivement leurs caractéristiques mécaniques, et cela jusqu'à la rupture qui intervient généralement après une période de roulage à plat trop brève pour les besoins généralement recherchés.

Le problème existe donc de fournir un dispositif de roulage à plat pour roue à pneumatique dans chambre à air qui ne présente pas les inconvénients des dispositifs connus et qui, notamment, procure de bonnes conditions de roulage à plat, aussi bien de confort que de durée, soit d'un poids inférieur à celui des dispositifs connus en matériaux semi-rigides souples, sans présenter les défauts de ces réalisations et, en outre, soit d'un coût qui rende son exploitation industrielle économiquement réalisable.

Le problème est résolu, selon l'invention, dans un dispositif de roulage à plat pour roue à pneumatique sans chambre à air monté sur une jante par ses talons annulaires coopérant avec les épaulements de ladite jante et comportant à l'intérieur du pneumatique un élément avec lequel est propre à coopérer la face interne de la bande de roulement dudit pneumatique lors du roulage à plat, ledit élément comprenant une embase annulaire en matériau élastomère munie d'une armature de renforcement et d'un diamètre intérieur sensiblement égal au diamètre extérieur du fond de jante avec laquelle il coopère pour verrouiller les talons du pneumatique ou contribuer à ce verrouillage, une pluralité de rayons déformables s'étendant radialement à partir de la surface extérieure de ladite embase et étant distribués à intervalles réguliers autour de celle-ci, avec une ceinture périphérique dont la surface externe est propre à servir de surface d'appui à la face interne de la bande de roulement lors du roulage à plat, par le fait que ladite ceinture est inextensible, est réalisée en un matériau à haut module de flexion, avantageusement en métal ou en un matériau composite du type fibres de verre/résine et est reliée auxdits rayons déformables par des moyens de liaison.

La section droite de ladite ceinture est, en outre, choisie de manière à ne pas endommager la bande de roulement, lors du roulage à plat, mais aussi pour présenter un moment d'inertie élevé, favorable à la rigidité de ladite ceinture pour fournir de meilleures caractéristiques de roulement lors du roulage à plat.

Lorsque ladite ceinture est suffisamment déformable pour être introduite dans le pneumatique par le passage central du celui-ci, la ceinture peut être réalisée d'une pièce, en particulier par les techniques usuelles de fabrication des matériaux composites.

En variante, lorsque ladite ceinture n'est pas suffisamment déformable pour être introduite d'une pièce dans le passage du pneumatique, l'invention prévoit soit de réaliser ladite ceinture en plusieurs éléments, alors assemblés après mise en place dans le pneumatique, soit de réaliser ladite ceinture sous forme d'une anneau fendu dont les extrémités sont alors solidarisées entre elles à l'intérieur du pneumatique après montage dans celui-ci, de préférence par des moyens à plat joint.

Selon une autre caractéristique de l'invention, on prévoit que la liaison entre les rayons déformables et la ceinture inextensible soit constituée par des moyens à forme conjuguée, avantageusement du type à queue d'aronde ou annalogue, et qui sont ménagés sur les extrémités radialement externes desdits rayons, d'une part, et sur la face interne de ladite ceinture périphérique inextensible, d'autre part.

Dans une forme de réalisation préférée, les moyens de liaison des rayons déformables et de la ceinture sont constitués par des assemblages à vis/écrou, les écrous étant alors noyés dans les extrémités radialement externes de chaque rayon déformable.

Dans une réalisation préférée, la section transversale de la ceinture inextensible comprend une partie sensiblement plane dont les extrémités sont recourbées, quelque peu suivant une forme de "corne de bélier", conférant à l'ensemble un moment d'inertie élevé.

Selon une autre caractéristique de l'invention, les rayons déformables sont constitués par des pièces de section sensiblement parallélépipédique, avantageusement armées par des pièces de renfort internes.

Selon encore une autre caractéristique de l'invention, les rayons déformables sont en matériau élastomère et l'ensemble desdits rayons et de l'embase annulaire en matériau élastomère sont d'un seul tenant, pour former un élément unitaire qui est alors mis en forme par les techniques usuelles de confection des pièces en caoutchouc.

Dans une autre forme de réalisation, chaque rayon déformable est constitué par une pièce composite quelque peu analogue à un manchon en matériau élastomère, avantageusement armé par un ou des enroulements de spires hélicoïdales, dont les extrémités sont obturées par des inserts qui servent simultanément au montage desdits manchons sur l'embase annulaire au contact de la jante et propres à recevoir à leur autre extrémité la ceinture inextensible.

Le diamètre externe de la ceinture inextensible est, en condition de montage, sensiblement égal au diamètre moyen pris entre la jante et le plus grand diamètre de la bande de roulement, permettant ainsi un roulage satisfaisant aussi bien dans la condition normale que lors du roulage à plat.

Dans une forme de réalisation préférée, on prévoit que l'élément caractéristique de l'invention soit disposé de façon excentrée à l'intérieur du pneumatique, c'est-à-dire que le plan médian perpendiculaire à l'axe dudit élément ne soit pas confondu avec le plan équatorial de pneumatique, l'embase annulaire de l'élément étant alors conformée pour ménager sur une de ses faces latérales un logement d'une extrémité d'une bande de verrou de talons prenant appui sur un premier talon et, sur son autre extrémité latérale, une nervure d'appui sur un autre talon du pneumatique.

L'invention sera bien comprise par la description qui suit, faite à titre d'exemple et en référence au dessin annexé dans lequel :

- la figure 1 est une vue partielle schématique, en coupe, d'une roue équipée d'un dispositif selon l'invention ;

- la figure 2 est une vue en coupe selon la ligne 2-2 de la figure 1 ;

- la figure 3 est une vue schématique en coupe d'un rayon déformable du dispositif selon l'invention ;

- la figure 4 montre la forme, en section, d'une ceinture périphérique inextensible d'un dispositif selon l'invention ;

- la figure 5 est une vue en élévation d'un dispositif selon l'invention pour une autre forme de réalisation ;

- la figure 6 est une vue en coupe selon la ligne 6-6 de la figure 5, à plus grande échelle ;

- la figure 7 est une vue partielle en coupe selon la ligne 7-7 de la figure 6, à encore plus grande échelle ;

- la figure 8 est une vue très schématique analogue à la figure 5 d'une autre forme de réalisation ;

- la figure 9 est une vue schématique d'un rayon déformable du dispositif tel qu'illustré sur la figure 8.

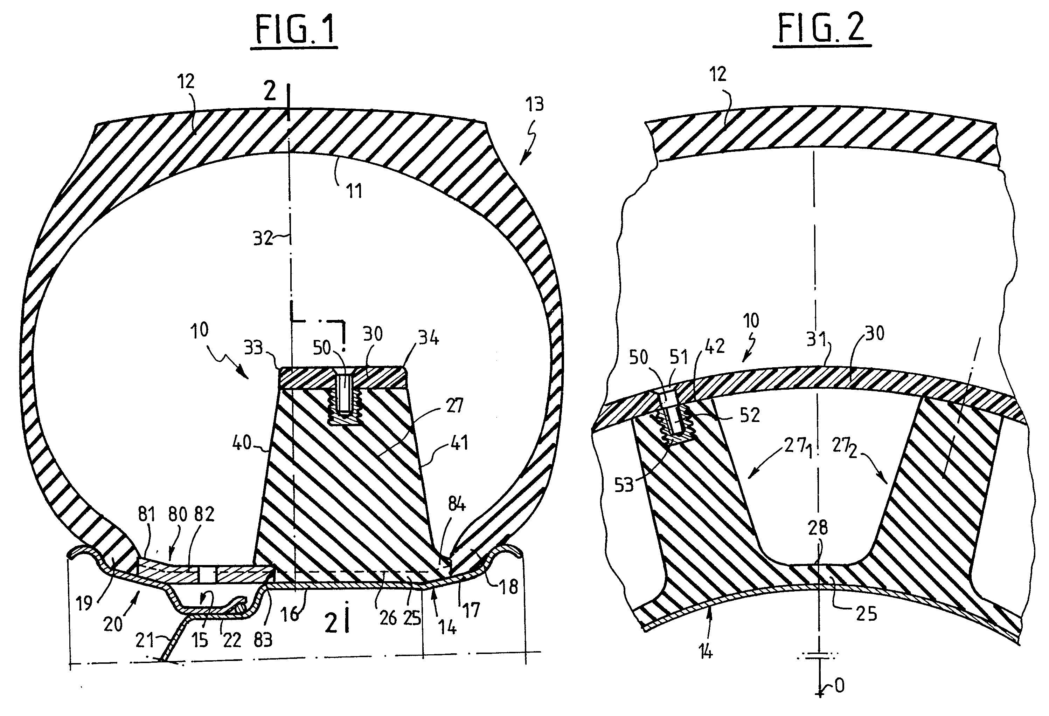

On se réfère d'abord aux figures 1 et 2 qui montrent une première forme de réalisation d'un dispositif de roulage à plat selon l'invention prévu pour équiper une roue à pneumatique, sans chambre à air. Il comprend essentiellement un élément 10 avec lequel est propre à coopérer, lors du roulage à plat, la face interne 11 de la bande de roulement 12 d'un pneumatique 13 sans chambre à air lequel est monté sur une jante 14. Dans la forme de réalisation décrite et représentée, ladite jante est du type démontable, à puits de jante 15 adjacent à une partie de jante plate 16 dont l'épaulement 17 porte un premier talon 18 du pneumatique 13, l'autre talon 19 reposant sur la partie amovible 20 de la jante qui est propre à être fixée, par des moyens non représentés, à un flasque 21 prolongeant la partie 22 qui fait suite à la partie plane 16 de la jante et qui est placé au droit du puits de jante.

L'élément 10, qui repose sur la jante 14 par une embase annulaire 25 en matériau élastomère dans laquelle est placée une armature de renforcement 26 et dont le diamètre interne est sensiblement égal au diamètre externe du fond de jante 16, comprend également outre ladite embase, une pluralité de rayons déformables $27_1$, $27_2$, etc... s'étendant radialement à partir de la surface externe 28 de l'embase et qui, régulièrement distribués au point de vue angulaire autour de l'axe O du dispositif, sont reliés à leurs extrémités externes par une ceinture périphérique inextensible 30.

Cette dernière, dont la surface externe 31 est lisse, pour s'adapter au galbe de la face interne 11 de la bande de roulement 12 du pneumatique, est réalisée en un matériau à module de flexion élevée.

Un tel matériau peut être sous forme d'un métal ou alliage métallique ou, encore, et de préférence, un matériau composite en fibres de verre et résine, en particulier en fibres de verre et résine époxy.

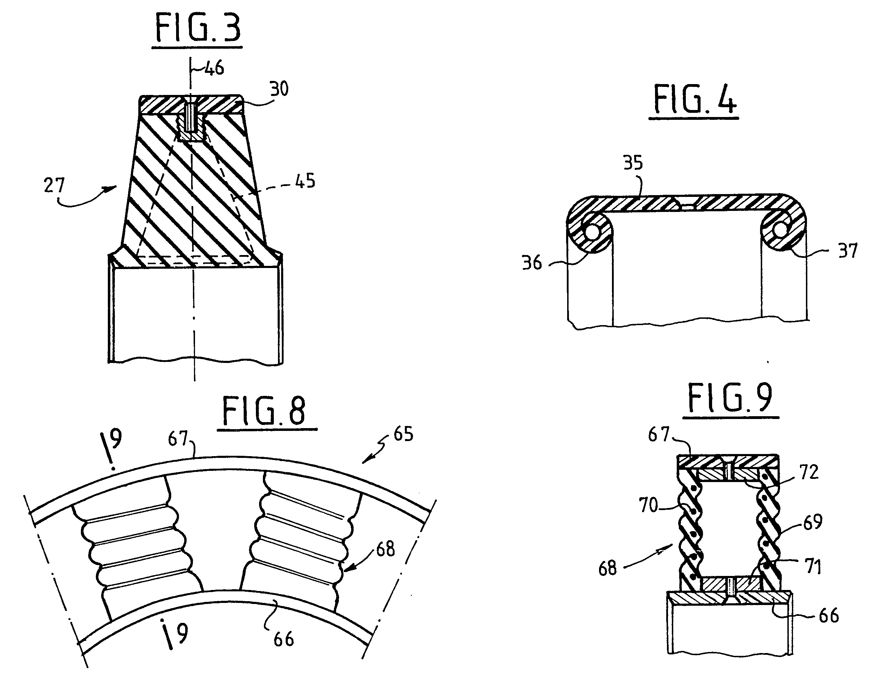

La ceinture inextensible 30, dont le diamètre de la surface externe 31 est sensiblement égal au diamètre moyen pris entre la jante et le plus grand diamètre du pneumatique dans le plan équatorial 32 de ce dernier, présente avantageusement une section droite à moment d'inertie élevé, par exemple parallélépipédique à coins 33 et 34 arrondis, comme montré sur la figure 1 ou encore, comme montré sur la figure 4 à zone centrale 35' plane, et extrémités latérales 36 et 37 lovées, donnant à l'ensemble une forme quelque peu analogue à une représentation schématique d'une corne de bélier.

Quelle que soit la section droite de la ceinture inextensible l'invention prévoit, d'une part, des réalisations selon lesquelles ladite ceinture est suffisamment déformable pour être introduite par le passage central du pneumatique 13, et elle est alors réalisée d'un seul tenant, par exemple par les techniques usuelles de fabrication de matériaux composites ou bien, en variante, des réalisations selon lesquelles ladite ceinture est trop peu déformable pour pouvoir ainsi être introduite dans le pneumatique 13. Dans ce dernier cas, la couronne inextensible 30 est alors réalisée en plusieurs parties qui sont réunies entre elles après avoir été introduites séparément dans le pneumatique ou bien, en variante, est sous forme d'une bague fendue, d'un seul tenant, qui peut être introduite par le passage central du pneumatique 13 et dont les extrémités sont alors réunies fixement entre elles par des moyens d'assemblage, par exemple à plat joint.

Conformément à une réalisation préférée de l'invention, également, les rayons 27 déformables sont en un matériau élastomère et lesdits rayons sont soit d'une pièce avec l'embase 25, soit fabriqués indépendamment de ladite embase à laquelle ils sont alors fixés.

Dans le premier cas, les rayons 27 sont des pièces pleines en matériau élastomère, ayant avantageusement une section par un plan axial qui est comme montrée sur la figure 1, c'est-à-dire d'allure générale trapézoïdale avec des flancs 40 et 41 qui vont en se rapprochant en direction de la surface externe 42 desdits rayons, laquelle est d'un diamètre correspondant au diamètre interne de la ceinture inextensible 30.

L'invention prévoit avantageusement de munir lesdits rayons d'armatures de renfort 45, disposées parallèlement ou perpendiculairement à l'axe principal 46 des rayons, pour réduire leur amplitude de déformation, conférant ainsi auxdits rayons une rigidité radiale propre à emmagasiner et à restituer l'énergie de roulage sans toutefois entraîner un échauffement important, comme il en apparaît avec les dispositifs connus réalisés uniquement, ou pour leur plus grande partie, en des matériaux souples.

Pour la solidarisation de la ceinture inextensible 30 et des rayons 27, l'invention prévoit dans la forme de réalisation illustrée sur les figures 1 à 3, que celle-ci ait lieu à l'aide de vis 50 à tête 51 noyée dans ladite ceinture et dont la partie filetée 52 coopère avec un écrou métallique 53 noyé dans chaque rayon 27, à fleur de la surface radialement externe 42 dudit rayon.

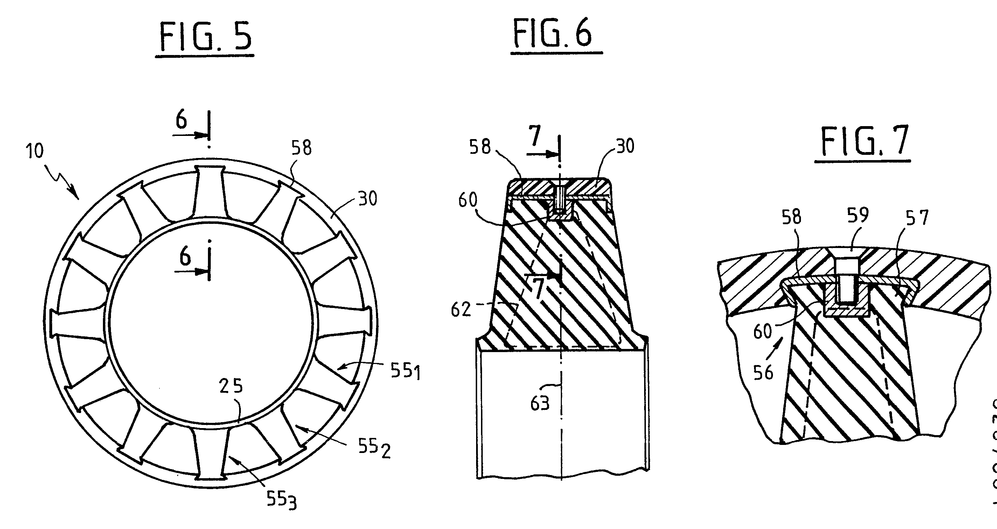

Dans une autre forme de réalisation, figures 5 à 7, la ceinture inextensible 30 de l'élément 10 est reliée à l'embase 25 par des rayons $55_1$, $55_2$, $55_3$, etc... de structure très voisine de celle des rayons 27 de la forme de réalisation précédente mais qui en diffèrent par le fait que leur extrémité 56, figure 7, distante de l'embase 25 est conformée suivant une queue d'aronde 57 de forme et dimensions conjuguées de celles de creusures 58 prévues dans la couronne inextensible 30 pour les recevoir, des vis 59 qui coopèrent avec des écous 60 noyés dans les rayons contribuant à la solidarisation relative des rayons et de la ceinture. Dans cette réalisation, également, chaque rayon est muni d'armatures de renforcement 62, disposées ici, aussi, parallèlement ou perpendiculairement à l'axe principal 63 desdits rayons, figure 6.

Quel que soit le mode de réalisation la faible déformation diamétrale de la couronne permet de transmettre à l'ensemble du dispositif les efforts qui apparaissent lors du roulage à plat. De façon plus précise, la structure à rayons du dispositif de l'invention présente lors du roulage à plat des rayons qui, proches du sol, sont comprimés alors que les rayons qui leur sont diamétralement opposés travaillent en traction, avec bien entendu des états intermédiaires entre les uns et les autres.

Le fait de faire travailler toutes les parties constitutives du dispositif permet, d'une part, et en raison des caractéristiques élastiques des rayons, de conférer au dispositif une souplesse satisfaisante par rapport à l'axe de rotation, ainsi qu'une capacité à absorber les obstacles tout en n'exigeant qu'une masse relativement faible d'élastomère pour sa constitution, ce qui en diminue à la fois le coût et le poids.

L'invention n'est pas limitée aux formes de réalisations décrites en référence aux figures 1 à 7.

Elle peut, en effet, être matérialisée sous d'autres formes. Ainsi, et à titre d'exemple, a-t-on représenté sur les figures 8 et 9 un dispositif 65 comportant une embase 66, destinée à reposer sur la jante de la roue et une ceinture inextensible 67, l'embase et la ceinture étant reliées par des rayons 68 constitués par des manchons 69 en matériau élastomère à corrugations, enfermant chacun une armature constituée par un ressort hélicoïdal 70 et fermés à leurs extrémités longitudinales par des inserts 71 et 72 lesquels servent également au montage, par exemple par des moyens de vis analogues à ceux décrits ci-dessus, sur l'embase 66 et la couronne 67, respectivement. De tels rayons, propres à emmagasiner et restituer l'énergie sans échauffement notable conduisent également à de bons résultats.

Pour le montage du dispositif selon l'invention, on prévoit de lui associer un verrou de talon 80, figure 1, le plus simplement réalisé sous forme d'une bande annulaire 81 en matériau élastomère munie d'une armature de renforcement 82, la bande prenant appui par une de ses faces latérales contre le talon 19 et étant logée par son autre face latérale dans une gorge de forme conjuguée 83 de l'embase 25. Lorsque, comme montré sur la figure 1, le dispositif 10 est logé dans le pneumatique 13 de manière excentrée, c'est-à-dire avec son plan équatorial distant du plan équatorial 32 du pneumatique, le second talon 18 dudit pneumatique est maintenu au contact de l'épaulement 17 de la jante 14 par une nervure 84 de l'embase 25.

Dans les réalisations montrées schématiquement sur les figures 3 ou 6, le verrou de talons n'est pas sous forme d'une pièce distincte du dispositif mais est réalisé par l'embase 25 elle-même, dont les dimensions, mesurées parallèlement à l'axe de la roue, correspondent à l'écartement des talons 18 et 19 dans la condition normale du pneumatique.

## Revendications

1. Dispositif de roulage à plat pour roue à pneumatique sans chambre à air monté sur une jante par ses talons annulaires coopérant avec les épaulements de ladite jante et comportant à l'intérieur du pneumatique un élément avec lequel est propre à coopérer la face interne de la bande de roulement dudit pneumatique lors du roulage à plat, ledit élément (10, 65) comprenant une embase annulaire (25, 66) en matériau élastomère munie d'une armature de renforcement (26) et d'un diamètre intérieur sensiblement égal au diamètre extérieur du fond de jante (14) avec laquelle il coopère pour verrouiller les talons (18, 19) du pneumatique (13), ou contribuer à ce verrouillage, une pluralité de rayons (27, 55, 68) déformables s'étendant radialement à partir de la surface extérieure de ladite embase et étant distribués à intervalles réguliers autour de celle-ci et une ceinture périphérique (30, 67) dont la surface externe est propre à servir de surface d'appui à la face interne de la bande de roulement (12) lors du roulage à plat, caractérisé en ce que ladite ceinture (30, 67) est inextensible, est réalisée en un matériau à haut module de flexion, avantageusement en métal ou en un matériau composite du type fibres de verre/résine et est reliée auxdits rayons déformables par des moyens de liaison (50, 59).

2. Dispositif selon la revendication 1, caractérisé en ce que la section droite de ladite ceinture est, en outre, choisie de manière à ne pas endommager la bande de roulement (12) lors du roulage à plat et pour présenter un moment d'inertie élevé, favorable à sa rigidité.

3. Dispositif selon la revendication 1, caractérisé en ce que ladite ceinture (30, 67) est réalisée d'une pièce et est suffisamment déformable pour être introduite dans le pneumatique (13) par le passage central de celui-ci.

4. Dispositif selon la revendication 1, caractérisé en ce que ladite ceinture est réalisée en plusieurs éléments assemblés après mise en place dans le pneumatique (13) et à extrémités solidarisées entre elles à l'intérieur du pneumatique après montage dans celui-ci de préférence par des moyens à plat joint.

5. Dispositif selon l'une quelconque des revendications précédentes, caractérisé en ce que la liaison entre les rayons (55) déformables et la ceinture inextensible (30) est obtenue par des moyens à forme conjuguée, avantageusement du type à queue d'aronde ou analogue, et qui sont ménagés sur les extrémités radialement externes desdits rayons (55), d'une part, et sur la face interne de ladite ceinture périphérique inextensible (30), d'autre part.

6. Dispositif selon l'une quelconque des revendications précédentes, caractérisé en ce que les moyens de liaison des rayons (27) et de la ceinture (30) sont constitués par des assemblages à vis/écrou (50, 53), les écrous (53) étant alors noyés dans les extrémités radialement externes de chaque rayon déformable (27).

7. Dispositif selon l'une quelconque des revendications précédentes, caractérisé en ce que la section transversale de la ceinture inextensible comprend une partie sensiblement plane (35) dont les extrémités (36, 37) sont recourbées, quelque peu suivant une forme de "corne de bélier", conférant à l'ensemble un moment d'inertie élevé (figure 4).

8. Dispositif selon l'une quelconque des revendications précédentes, caractérisé en ce que les rayons déformables (27, 55) sont constitués par des pièces de section sensiblement parallélépipédique.

9. Dispositif selon la revendication 8, caractérisé en ce que les rayons déformables (27, 55) sont constitués par des pièces pleines sensiblement tronconiques.

10. Dispositif selon l'une quelconque des revendications précédentes, caractérisé en ce que lesdits rayons déformables (27, 55) sont armés par des armatures de renfort internes (45, 62).

11. Dispositif selon l'une quelconque des revendications précédentes, caractérisé en ce que les rayons déformables sont en matériau élastomère et en ce que l'ensemble desdits rayons et de l'embase annulaire (25) en matériau élastomère est d'un seul tenant, pour former un élément unitaire mis en forme par les techniques usuelles de confection de pièces en caoutchouc.

12. Dispositif selon l'une quelconque des revendications 1 à 10, caractérisé en ce que les rayons déformables (68) sont constitués par des pièces composites quelque peu analogues à des manchons (69) en matériau élastomère, avantageusement armé par un ou des enroulements de spires hélicoïdales (70) et dont les extrémités sont obturées par des inserts (71, 72) qui servent simultanément au montage desdits manchons (69) sur l'embase annulaire (66) au contact de la jante et à la fixation de la ceinture inextensible (67) à leur autre extrémité.

13. Dispositif selon l'une quelconque des revendications précédentes, caractérisé en ce que le diamètre externe de la ceinture inextensible (30, 67) est, en condition de montage, sensiblement égal au diamètre moyen pris entre la jante et le plus grand diamètre de la bande de roulement (12), permettant ainsi un roulage satisfaisant dans la condition normale et en case de roulage à plat.

14. Dispositif selon l'une quelconque des revendications précédentes, caractérisé en ce que l'élément (10) est disposé de façon excentrée à l'intérieur du pneumatique (13), c'est-à-dire avec le plan médian perpendiculaire à l'axe dudit élément distant du plan équatorial (32) du pneumatique (13), l'embase annulaire (25) de l'élément (10) étant en outre conformée pour ménager sur une de ses faces latérales un logement (83) d'une extrémité d'une bande de verrou de talons (80) et, sur son autre extrémité latérale, une nervure (84) d'appui sur un talon (18) du pneumatique (13).

0297984

FIG.1

FIG.2

FIG.3

46

30

27

45

FIG.4

35

36

37

FIG.8

19

67

65

68

66

19

FIG.9

67

72

70

69

68

71

66

0297984

# FIG. 5

# FIG. 6

# FIG. 7

0297984

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 163 466  (G. WATTS)<br>* Colonne 2, ligne 3 - colonne 4, ligne 20 *<br>--- | 1 | B 60 C   17/06 |
| A | US-A-4 248 286  (W. CURTISS)<br>--- | 1,2 | |
| A | US-A-2 262 780  (A. SHERWOOD)<br>--- | | |
| A | FR-A-  257 952  (HUTCHINSON)<br>--- | | |
| A | EP-A-0 159 274  (HUTCHINSON)<br>--- | | |
| A | EP-A-0 104 977  (HUTCHINSON)<br>----- | | |

DOMAINES TECHNIQUES RECHERCHES (Int. Cl.4)

B 60 C   17/00

Le présent rapport a été établi pour toutes les revendications

| Lieu de la recherche | Date d'achèvement de la recherche | Examinateur |
|---|---|---|
| LA HAYE | 06-09-1988 | SCHMITT L.P. |